# EUROPEAN PATENT APPLICATION

(11) **EP 2 340 961 A2**
(43) Date of publication of application: **06.07.2011**
(21) Application number: 10016111.6
(22) Date of filing: 27.12.2010
(51) Int. Cl.: B60L 11/18, H02J 7/00

(54) **High-voltage battery charging system for use in electric vehicle**

(30) Priority: 29.12.2009 CN 200910262532
(71) Applicant: Delta Electronics, Inc., Taoyuan Sien 333, Taiwan (CN)
(72) Inventor: Chen, Chin-Hou, Taoyuan Hsien 320 (TW); Li, Han, Pudong Shanghai (CN); Hsiao, Ko-Yu, Taoyuan Hsien 320 (TW); Liu, Gang, Pudong Shanghai (CN)
(74) Representative: UEXKÜLL & STOLBERG

(57) **Abstract**

A high-voltage battery charging system is installed in a vehicle body of the electric vehicle for charging a high-voltage battery unit within the vehicle body. The high-voltage battery charging system includes a rectifier circuit, a power factor correction circuit and a non-isolated DC-DC converting circuit. The rectifier circuit is connected to a common terminal for rectifying an AC input voltage into a rectified voltage. The power factor correction circuit is connected to the rectifier circuit and a bus for increasing a power factor and generating a bus voltage. The non-isolated DC-DC converting circuit is connected to the power factor correction circuit and the high-voltage battery unit for charging the high-voltage battery unit, wherein no transformer is included in the non-isolated DC-DC converting circuit.

## Description

### FIELD OF THE INVENTION

The present invention relates to a high-voltage battery charging system, and more particularly to a high-voltage battery charging system for use in an electric vehicle.

### BACKGROUND OF THE INVENTION

Fossil fuels such as petroleum and coal are widely used in automobiles or power plants for generating motive force or electrical power. As known, burning fossil fuels produces waste gases and carbon oxide. The waste gases may pollute the air. In addition, carbon dioxide is considered to be a major cause of the enhanced greenhouse effect. It is estimated that the world's oils supply would be depleted in the next several decades. The oil depletion may lead to global economic crisis.

Consequently, there are growing demands on clean and renewable energy. Recently, electric vehicles and plug-in hybrid electric vehicles have been researched and developed. Electric vehicles and plug-in hybrid electric vehicles use electrical generators to generate electricity. In comparison with the conventional gasoline vehicles and diesel vehicles, the electric vehicles and hybrid electric vehicles are advantageous because of low pollution, low noise and better energy utilization. The uses of the electric vehicles and hybrid electric vehicles can reduce carbon dioxide release in order to decelerate the greenhouse effect.

As known, an electric vehicle or a plug-in hybrid electric vehicle has a built-in battery as a stable energy source for providing electric energy for powering the vehicle. In a case that the electric energy stored in the battery is exhausted, the battery is usually charged by a battery charger. Generally, the current battery charger has an isolated architecture, and a transformer is an essential component in an electric energy path of an isolated DC-DC converter. During the process of converting electric energy by the transformer, magnetic loss (iron loss) and wire loss (copper loss) are incurred. That is, the power loss of the isolated DC-DC converter is very high. In this situation, the charging time of the battery is long. Moreover, since an insulating tape or a three-layered insulating wire is required for isolating the primary winding from the secondary winding of the transformer, the process of fabricating the transformer is complicated and costly.

Therefore, there is a need of providing a high-voltage battery charging system for use in an electric vehicle so as to obviate the drawbacks encountered from the prior art.

### SUMMARY OF THE INVENTION

It is an object of the present invention to provide a high-voltage battery charging system for use in an electric vehicle in order to reduce power loss, reduce the fabricating cost, shorten the charging time, and increase the operating efficiency.

In accordance with an aspect of the present invention, there is provided a high-voltage battery charging system for use in an electric vehicle. The high-voltage battery charging system is installed in a vehicle body of the electric vehicle for charging a high-voltage battery unit within the vehicle body. The high-voltage battery charging system includes a rectifier circuit, a power factor correction circuit and a non-isolated DC-DC converting circuit. The rectifier circuit is connected to a common terminal for rectifying an AC input voltage into a rectified voltage. The power factor correction circuit is connected to the rectifier circuit and a bus for increasing a power factor and generating a bus voltage. The non-isolated DC-DC converting circuit is connected to the power factor correction circuit and the high-voltage battery unit for charging the high-voltage battery unit, wherein no transformer is included in the non-isolated DC-DC converting circuit.

The above contents of the present invention will become more readily apparent to those ordinarily skilled in the art after reviewing the following detailed description and accompanying drawings, in which:

### BRIEF DESCRIPTION OF THE DRAWINGS

FIG 1 is a schematic circuit block diagram illustrating the architecture of a high-voltage battery charging system according to an embodiment of the present invention;

FIG 2 is a schematic detailed circuit block diagram illustrating the architecture of a high-voltage battery charging system according to an embodiment of the present invention;

FIG 3 is a schematic detailed circuit block diagram illustrating the architecture of another high-voltage battery charging system according to an embodiment of the present invention;

FIG 4 is a timing waveform diagram schematically illustrating the corresponding voltage signals and current signals processed in the high-voltage battery charging system of FIGS. 2 and 3;

FIG 5 is a schematic detailed circuit block diagram illustrating the architecture of another high-voltage battery charging system according to a further embodiment of the present invention; and

FIG 6 is a schematic detailed circuit block diagram illustrating the architecture of another high-voltage battery charging system according to a further embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

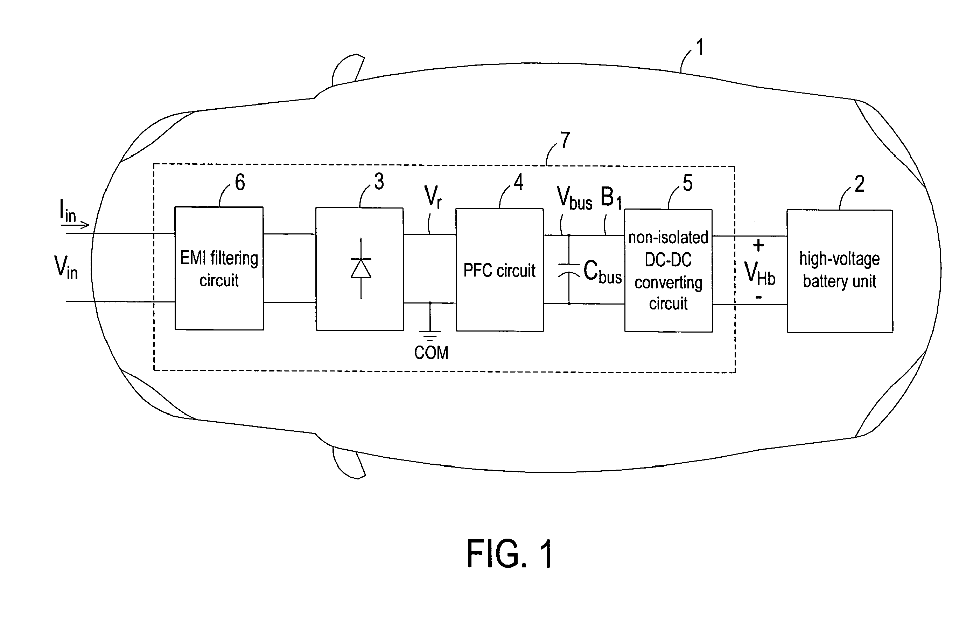

FIG 1 is a schematic circuit block diagram illustrating the architecture of a high-voltage battery charging system according to an embodiment of the present invention. The high-voltage battery charging system is installed in an electric vehicle body 1. The high-voltage battery charging system is used for receiving electric energy of an AC input voltage Vᵢₙ from an utility power source, and charging a high-voltage battery unit 2. As shown in FIG 1, the high-voltage battery charging system comprises a rectifier circuit 3, a power factor correction (PFC) circuit 4, a non-isolated DC-DC converting circuit 5 and a bus capacitor C_{bus}.

In this embodiment, the high-voltage battery charging system further comprises an electromagnetic interference (EMI) filtering circuit 6. The EMI filtering circuit 6 is connected to the input side of the rectifier circuit 3 for filtering off the surge and high-frequency noise contained in the AC input voltage V in and the AC input current Iᵢₙ. In addition, the use of the EMI filtering circuit 6 can reduce the electromagnetic interference resulted from the switching circuits of the non-isolated DC-DC converting circuit 5 and the PFC circuit 4, so that the adverse influence of the electromagnetic interference on the AC input voltage Vᵢₙ and the AC input current Iᵢₙ will be minimized. After the surge and high-frequency noise are filtered off by the EMI filtering circuit 6, the AC input voltage Vᵢₙ and the AC input current Iᵢₙ are transmitted to the input side of the rectifier circuit 3. The AC input voltage Vᵢₙ is rectified into a rectified voltage Vᵣ by the rectifier circuit 3.

The PFC circuit 4 is interconnected between the rectifier circuit 3 and a bus B₁ for increasing the power factor and generating a bus voltage V_{bus}. The non-isolated DC-DC converting circuit 5 is interconnected between the PFC circuit 4 and the high-voltage battery unit 2 for converting the bus voltage V_{bus} into a charging voltage V_{Hb}. The high-voltage battery unit 2 is charged by the charging voltage V_{Hb}. The bus capacitor C_{bus} is interconnected between the bus B₁ and a common terminal COM for energy storage and voltage stabilization. In accordance with a key feature of the present invention, no transformer is included in the electric energy path of the non-isolated DC-DC converting circuit 5. By mean of a switching circuit and an output filter circuit of the non-isolated DC-DC converting circuit 5, the high-voltage battery unit 2 is charged by the charging voltage V_{Hb}.

In this embodiment, the magnitude of the AC input voltage Vᵢₙ is 110~380 volts, the magnitude of the bus voltage V_{bus} is 350~450 volts, and the magnitude of the charging voltage V_{Hb} is 200~380 volts. The rectifier circuit 3, the PFC circuit 4, the non-isolated DC-DC converting circuit 5, the EMI filtering circuit 6 and the bus capacitor C_{bus} of the high-voltage battery charging system 7 and the high-voltage battery unit 2 are operated at high voltage values. As such, the high-voltage battery charging system 7 has low charging loss and short charging time during the charging process and has low power loss and enhanced efficiency during the driving process. Generally, voltage values of the high-voltage battery charging system 7 and the high-voltage battery unit 2 are higher than the safety extra-low voltage (e.g. 36V). For preventing the AC input voltage Vᵢₙ the bus voltage V_{bus} or the charging voltage V_{Hb} from attacking the driver or passengers within the electric vehicle body 1, a high voltage-resistant insulating material is used to separate or isolate the high-voltage battery charging system 7 and the high-voltage battery unit 2 from the electric vehicle body 1 where the driver or passengers is touchable. Alternatively, the high-voltage battery charging system 7 and the high-voltage battery unit 2 are separated from the electric vehicle body 1 by at least a specified safety distance (e.g. 3~8mm, 5mm, 6mm, 6.5mm, 7mm, 9mm or 12mm).

In an embodiment, the high-voltage battery charging system 7 and the high-voltage battery unit 2 are contained in respective insulated containers. In addition, the high-voltage battery charging system 7 is connected with the high-voltage battery unit 2 and the utility power source via high voltage-resistant cables with insulating covering (not shown). As such, the charging voltage V_{Hb} and the AC input voltage Vᵢₙ are respectively transmitted to the high-voltage battery unit 2 and the high-voltage battery charging system 7 through the high voltage-resistant cables.

In some embodiments, for protecting the driver or passengers, the surface of the electric vehicle body 1 is coated with a high voltage-resistant insulating material (e.g. an insulating varnish) or an insulating spacer is disposed at the contact region between the electric vehicle body 1, the high-voltage battery charging system 7 and the high-voltage battery unit 2.

An example of the non-isolated DC-DC converting circuit 5 includes but is not limited to a buck non-isolated DC-DC converting circuit, a buck-boost non-isolated DC-DC converting circuit or a boost non-isolated DC-DC converting circuit. An example of the PFC circuit 4 includes but is not limited to a continuous conduction mode (CCM) boost PFC circuit, a direct coupling modulated bias (DCMB) boost PFC circuit, a buck PFC circuit or a buck-boost PFC circuit. The high-voltage battery unit 2 includes one or more batteries such as lead-acid batteries, nickel-cadmium batteries, nickel iron batteries, nickel-metal hydride batteries, lithium-ion batteries, or a combination thereof.

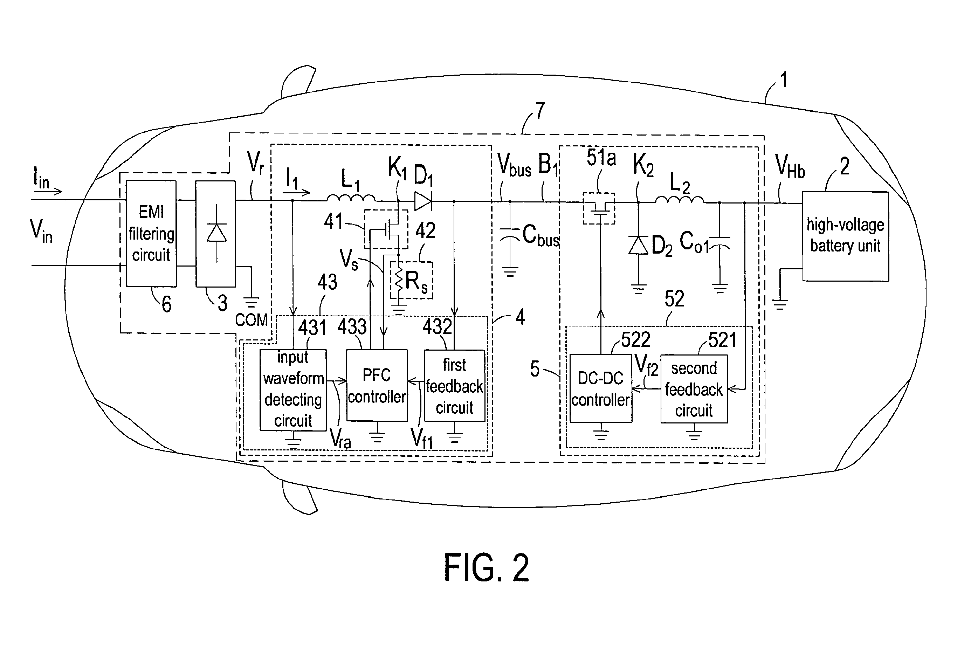

FIG 2 is a schematic detailed circuit block diagram illustrating the architecture of a high-voltage battery charging system according to an embodiment of the present invention. As shown in FIG 2, the PFC circuit 4 comprises a first inductor L₁, a first diode D₁ (a first rectifier element), a first switching circuit 41, a first current-detecting circuit 42 and a power factor correction controlling unit 43. A first terminal of the first inductor L₁ is connected to a positive output terminal of the rectifier circuit 3. A second terminal of first inductor L₁ is connected to a first connecting node K₁. The first switching circuit 41 and the first current-detecting circuit 42 are serially connected between the first connecting node K₁ and the common terminal COM. The anode of the first diode D₁ is connected to the first connecting node K₁. The cathode of the first diode D₁ is connected to the bus B₁. The power factor correction controlling unit 43 is connected to the common terminal COM, the positive output terminal of the rectifier circuit 3, the bus B₁, the control terminal of the first switching circuit 41 and the first current-detecting circuit 42. The power factor correction controlling unit 43 is used for controlling operations of the PFC circuit 4.

In a case that the first switching circuit 41 is conducted, the first inductor L₁ is in a charge status and the current magnitude of the first current I₁ is increased. The first current I₁ will be transmitted from the first inductor L₁ to the first current-detecting circuit 42 through the first switching circuit 41, so that a current-detecting signal Vₛ is generated by the first current-detecting circuit 42. Whereas, in a case that the first switching circuit 41 is shut off, the first inductor L₁ is in a discharge status and the current magnitude of the first current I₁ is decreased. The first current I₁ will be transmitted to the bus capacitor C_{bus} through the first diode D₁.

In this embodiment, the power factor correction controlling unit 43 comprises an input waveform detecting circuit 431, a first feedback circuit 432 and a power factor correction controller 433. The input waveform detecting circuit 431 is connected to the positive input terminal of the rectifier circuit 3, the power factor correction controller 433 and the common terminal COM. The input waveform detecting circuit 431 is used for reducing the voltage magnitude of the rectified voltage Vᵣ and filtering off the high-frequency noise contained in the rectified voltage Vᵣ, thereby generating an input detecting signal Vᵣₐ. The waveform of the input detecting signal Vᵣₐ is identical to that of the AC input voltage Vᵢₙ after being rectified. The first feedback circuit 432 is connected to the bus B1 the power factor correction controller 433 and the common terminal COM. The bus voltage V_{bus} is subject to voltage-division by the first feedback circuit 432, thereby generating a first feedback signal V_{fl}.

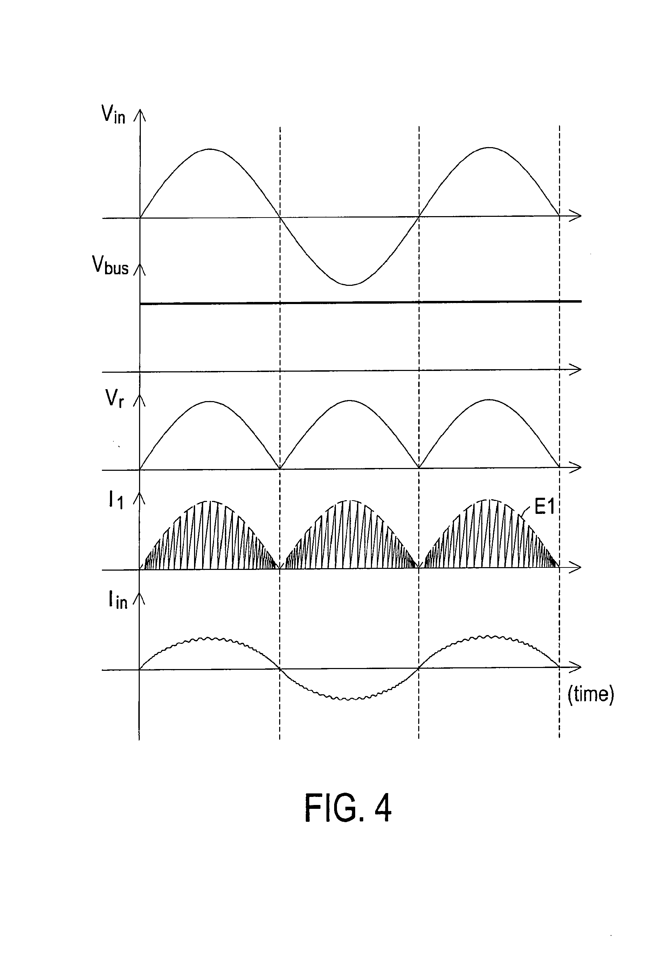

In other words, the power factor correction controller 433 acquires the waveform of the AC input voltage Vᵢₙ by the detecting signal Vᵣₐ. The power factor correction controller 433 discriminates whether the bus voltage V_{bus} is maintained at the rated voltage value (e.g. 450V) by the first feedback signal V_{fl}. The increase magnitude of the first current I₁ is detected by the current-detecting signal Vₛ. According to the detecting signal Vᵣₐ, V_{f1}, and Vₛ, the power factor correction controller 433 controls the duty cycle of the first switching circuit 41. As a consequence, the bus voltage V_{bus} is maintained at the rated voltage value, and the distribution of the AC input current Iᵢₙ is similar to the waveform of the AC input voltage Vᵢₙ. The distribution of the first current I₁ is similar to the waveform of the AC input voltage Vᵢₙ after being rectified. As shown in FIG 4, the envelop curve E1 of the first current I₁ illustrates a dotted line enclosing the periphery of the waveform of the AC input current Iᵢₙ. After the AC input current Iᵢₙ is processed by the EMI filtering circuit 6, the envelop curve of the AC input current Iᵢₙ is similar to the waveform of the AC input voltage V_{in.} In addition, the phase of the AC input current Iᵢₙ is similar to that of the AC input voltage Vᵢₙ. Under this circumstance, a better power factor correction function is achieved.

In this embodiment, the non-isolated DC-DC converting circuit 5 is a single-phase non-isolated DC-DC converting circuit. The non-isolated DC-DC converting circuit 5 comprises a second inductor L₂, a second diode D₂ (a second rectifier element), a first output capacitor Cₒ₁, a second switching circuit 51 a and a DC-DC controlling unit 52. The second inductor L₂, the second diode D₂ (a second rectifier element), the first output capacitor C₀₁ and the second switching circuit 51 a define a first phase power circuit. The second inductor L₂ is interconnected between a second connecting node K₂ and the high-voltage battery unit 2. The second diode D₂ is interconnected between the second connecting node K₂ and the common terminal COM. The first output capacitor C₀₁ is interconnected between the high-voltage battery unit 2 and the common terminal COM. The second switching circuit 51 a is interconnected between the bus B₁ and the second connecting node K₂. The DC-DC controlling unit 52 is connected to the control terminal of the second switching circuit 51a, the common terminal COM and the high-voltage battery unit 2. According to the charging voltage VH_{b,} the on/off statuses of the second switching circuit 51a are controlled by the DC-DC controlling unit 52.

In this embodiment, the DC-DC controlling unit 52 comprises a second feedback circuit 521 and a DC-DC controller 522. The second feedback circuit 521 is connected to the high-voltage battery unit 2, the DC-DC controller 522 and the common terminal COM. The charging voltage V_{Hb} is subject to voltage-division by the second feedback circuit 521, thereby generating a second feedback signal V_{f2}. The DC-DC controller 522 is connected to the control terminal of the second switching circuit 51 a, the second feedback circuit 521 and the common terminal COM. According to the second feedback signal V_{f2}, the DC-DC controller 522 discriminates whether the charging voltage V_{Hb} is maintained at the rated voltage value (e.g. 380V). As a consequence, the duty cycle of the second switching circuit 51 a is controlled, and the charging voltage V_{Hb} is maintained at the rated voltage value.

The electric energy path of the non-isolated DC-DC converting circuit 5 passes through the second switching circuit 51 a and the second inductor L₂. In other words, no transformer is included in the non-isolated DC-DC converting circuit 5. In the non-isolated DC-DC converting circuit 5, a first output filter circuit is defined by the second inductor L₂ and the first output capacitor Co₁. The operations of the first output filter circuit and the second switching circuit 51 a cause the high-voltage battery unit 2 to be charged by the charging voltage V_{Hb}. That is, by the switching circuit and the output filter circuit of the non-isolated DC-DC converting circuit 5, the high-voltage battery unit 2 is charged by the charging voltage V_{Hb}.

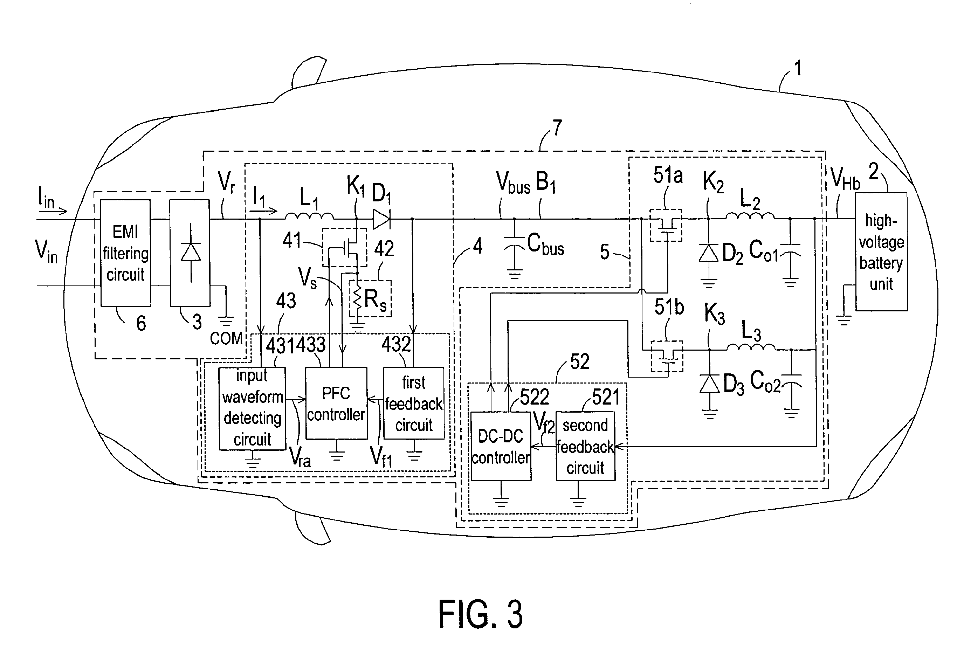

FIG 3 is a schematic detailed circuit block diagram illustrating the architecture of another high-voltage battery charging system according to an embodiment of the present invention. In comparison with FIG 2, the non-isolated DC-DC converting circuit 5 of FIG 3 is a multi-phase non-isolated DC-DC converting circuit. In addition to the first phase power circuit and the DC-DC controlling unit 52, the non-isolated DC-DC converting circuit 5 of FIG 3 further comprises a second phase power circuit. The second inductor L₂, the second diode D₂ (a second rectifier element), the first output capacitor Co₁ and the second switching circuit 51 a collectively define the first phase power circuit. A third inductor L₃, a third diode D₃ (a third rectifier element), a third output capacitor C₀₂ and a third switching circuit 51b collectively define the second phase power circuit. The second phase power circuit is connected with the first phase power circuit is parallel.

The third inductor L₃ is interconnected between a third connecting node K₃ and the high-voltage battery unit 2. The third diode D₃ is interconnected between the third connecting node K₃ and the common terminal COM. The second output capacitor Co₂ is interconnected between the high-voltage battery unit 2 and the common terminal COM. The third switching circuit 51b is interconnected between the bus B, and the third connecting node K₃. The DC-DC controlling unit 52 is connected to the control terminal of the second switching circuit 51a, the control terminal of the third switching circuit 51 b, the common terminal COM and the high-voltage battery unit 2. According to the charging voltage V_{Hb}, the second switching circuit 51 a and the third switching circuit 51 b are alternately conducted under control of the DC-DC controlling unit 52. As a consequence, the duty cycles of the second switching circuit 51a and the third switching circuit 51b are controlled, and the charging voltage V_{Hb} is maintained at the rated voltage value.

In this embodiment, since the non-isolated DC-DC converting circuit 5 is a multi-phase converting circuit, the high-voltage battery charging system 7 has enhanced operating efficiency and enhanced heat dissipating efficiency when the high-voltage battery charging system 7 is applied to an electric vehicle having higher charging power (e.g. 1000 or 2000 Watts).

In the above embodiments, the rectifier circuit 3 is a bridge rectifier circuit. The positive output terminal of the rectifier circuit 3 is connected to the input terminal of the power factor correction circuit 4. The negative output terminal of the rectifier circuit 3 is connected to the common terminal COM. An example of the first current-detecting circuit 42 includes but is not limited to a current transformer or a detecting resistor R_{S}. Each of the first switching circuit 41, the second switching circuit 51 a and the third switching circuit 51 b includes one or more switch elements. The switch element is a metal oxide semiconductor field effect transistor (MOSFET), a bipolar junction transistor (BJT) or an insulated gate bipolar transistor (IGBT). In this embodiment, each of the first switching circuit 41, the second switching circuit 51a and the third switching circuit 51b includes a metal oxide semiconductor field effect transistor (MOSFET). Each of the power factor correction controller 433 and the DC-DC controller 522 includes a controller, a micro controller unit (MCU) or a digital signal processor (DSP).

FIG 4 is a timing waveform diagram schematically illustrating the corresponding voltage signals and current signals processed in the high-voltage battery charging system of FIGS. 2 and 3. As shown in FIG 4, the first current I₁ is increased or decreased as the first switching circuit 41 is conducted or shut off. The distribution of the first current I₁ is similar to the waveform of the AC input voltage Vᵢₙ after being rectified. The envelop curve E1 of the first current I₁ is similar to the waveform of the AC input voltage Vᵢₙ.

The waveform of the AC input current Iᵢₙ indicates that the AC input current Iᵢₙ is not rectified and the surge and high-frequency noise contained in the AC input current Iᵢₙ has been filtered off by the EMI filtering circuit 6. In this embodiment, the electromagnetic interference resulted from the switching circuits of the non-isolated DC-DC converting circuit 5 and the PFC circuit 4 is minimized. The distribution of the AC input current Iᵢₙ is similar to the waveform of the AC input voltage Vᵢₙ. The envelop curve of the AC input current Iᵢₙ is similar to the waveform of the AC input voltage Vᵢₙ. The phase of the AC input current Iᵢₙ is similar to that of the AC input voltage Vᵢₙ. Since the phase difference is very low (e.g. 1~15 degrees), a better power factor correction function is achieved.

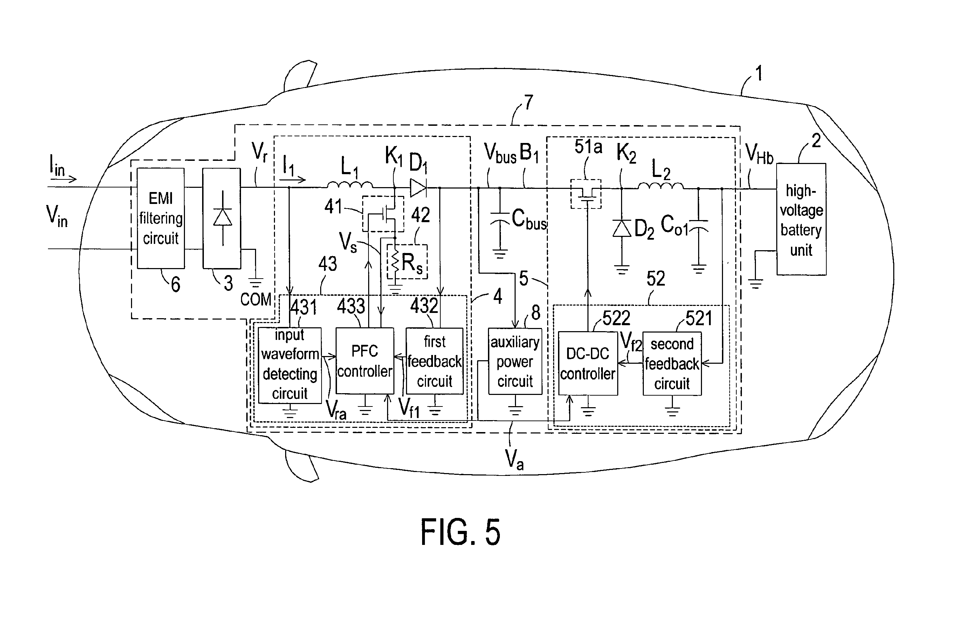

FIG 5 is a schematic detailed circuit block diagram illustrating the architecture of another high-voltage battery charging system according to a further embodiment of the present invention. In comparison with FIG 2, the high-voltage battery charging system of FIG 5 further comprises an auxiliary power circuit 8. The power input terminal of the auxiliary power circuit 8 is connected to the bus B1. The power output terminal of the auxiliary power circuit 8 is connected to the power factor correction controlling unit 43 and the DC-DC controlling unit 52 for converting the bus voltage V_{bus} into an auxiliary voltage Vₐ, thereby providing the electric energy required for operating the power factor correction controlling unit 43 and the DC-DC controlling unit 52. In this embodiment, the power output terminal of the auxiliary power circuit 8 is connected to the power factor correction controller 433 and the DC-DC controller 522. In some embodiments, the auxiliary power circuit 8 is connected to the input waveform detecting circuit 431, the first feedback circuit 432 and the second feedback circuit 521 to provide electric energy to the input waveform detecting circuit 431, the first feedback circuit 432 and the second feedback circuit 521 (not shown). Since the auxiliary power circuit 8 receives the bus voltage V_{bus} rather than the AC input voltage Vᵢₙ, the overall power factor of the integrated circuit is not adversely affected by the auxiliary power circuit 8 and thus a stable auxiliary voltage Vₐ is achievable.

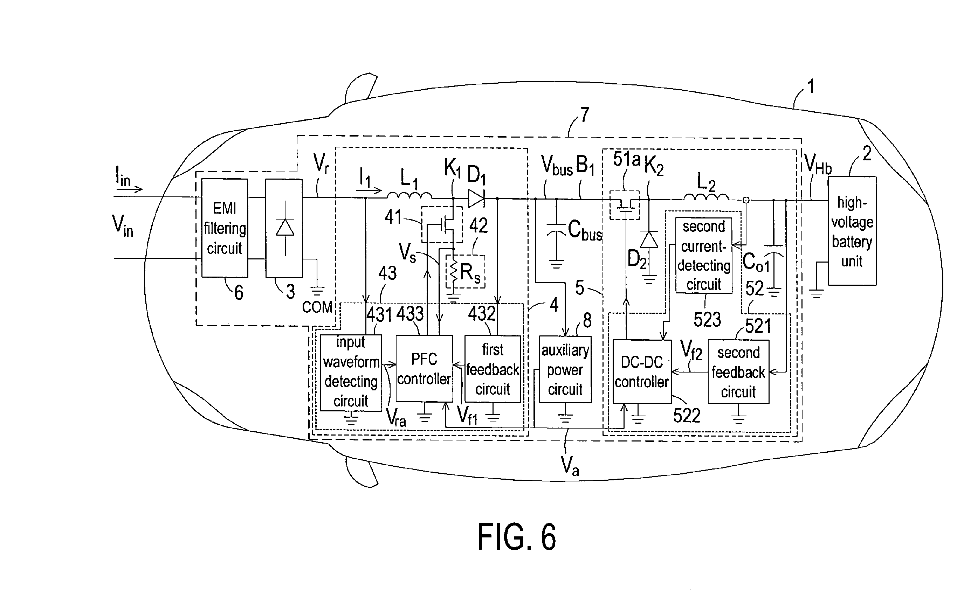

FIG 6 is a schematic detailed circuit block diagram illustrating the architecture of another high-voltage battery charging system according to a further embodiment of the present invention. In this embodiment, the high-voltage battery charging system further comprises a second current-detecting circuit 523. The second current-detecting circuit 523 is used for sampling the current signal outputted from the non-isolated DC-DC converting circuit 5, detecting the current flowing through the second inductor L₂ of the non-isolated DC-DC converting circuit 5, or detecting the current flowing through the second switching circuit 51 a and the second diode D₂. For clarification, only the current flowing through the second inductor L₂ of the non-isolated DC-DC converting circuit 5 is shown. The other currents may be detected by the similar approaches. In comparison with FIG 5, the DC-DC controlling unit 52 of the non-isolated DC-DC converting circuit 5 of FIG 6 further comprises the second current-detecting circuit 523. The second current-detecting circuit 523 is connected to the second inductor L₂ and the DC-DC controller 522 for sampling the current signal outputted from the non-isolated DC-DC converting circuit 5. In this embodiment, the output current is replaced by the current flowing through the second inductor L₂. The high-voltage battery unit 2 is charged by the non-isolated DC-DC converting circuit 5 with a constant voltage. In addition, since the current flowing through the second inductor L₂ is detected by the second current-detecting circuit 523, the duty cycle of the second switching circuit 51 a could be determined by the DC-DC controlling unit 52. In this situation, the high-voltage battery unit 2 could be charged by the non-isolated DC-DC converting circuit 5 with a constant current. In some embodiments, the duty cycle of the second switching circuit 51 a is determined by the DC-DC controlling unit 52 according to the current of the second inductor L₂ detected by the second current-detecting circuit 523 or the output voltage acquired by the second feedback circuit 521. In this situation, the high-voltage battery unit 2 could be charged by the non-isolated DC-DC converting circuit 5 with constant power. That is, the high-voltage battery unit 2 could be charged with constant charging current or constant charging power. In a case that the high-voltage battery unit 2 is overheated and the charging current is too high, the second current-detecting circuit 523 could discriminate whether the charging current exceeds a threshold value. Under control of the DC-DC controller 522, the duty cycle of the second switching circuit 51a is reduced or the second switching circuit 51 a is disabled. As a consequence, the possibility of burning out the non-isolated DC-DC converting circuit 5 is minimized.

From the above description, since no transformer is included in the electric energy path of the non-isolated DC-DC converting circuit of the high-voltage battery charging system according to the present invention, the power loss and the fabricating cost are both reduced, the charging time is shortened, and the operating efficiency is enhanced. Moreover, since the operating voltages of the high-voltage battery charging system and the high-voltage battery unit are very high, the charging loss is reduced and the charging time is further shortened. By means of the power factor correction circuit and the electromagnetic interference filtering circuit, the power factor is enhanced and the electromagnetic interference is reduced.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A high-voltage battery charging system for use in an electric vehicle, said high-voltage battery charging system being installed in a vehicle body of said electric vehicle for charging a high-voltage battery unit within said vehicle body, said high-voltage battery charging system comprising:
a rectifier circuit connected to a common terminal for rectifying an AC input voltage into a rectified voltage;
a power factor correction circuit connected to said rectifier circuit and a bus for increasing a power factor and generating a bus voltage; and
a non-isolated DC-DC converting circuit connected to said power factor correction circuit and said high-voltage battery unit for charging said high-voltage battery unit, wherein no transformer is included in said non-isolated DC-DC converting circuit.

2. The high-voltage battery charging system according to claim 1 further comprising:
a bus capacitor connected to said bus and said common terminal for energy storage and voltage stabilization; and
an auxiliary power circuit connected to said bus, said power factor correction circuit and said non-isolated DC-DC converting circuit for converting said bus voltage into an auxiliary voltage, thereby providing electric energy for operating said power factor correction circuit and said non-isolated DC-DC converting circuit.

3. The high-voltage battery charging system according to claim 2 further comprising an electromagnetic interference filtering circuit, which is connected to said rectifier circuit for filtering off surge and high-frequency noise contained in said AC input voltage and an AC input current, and reducing adverse influence of electromagnetic interference on said AC input voltage.

4. The high-voltage battery charging system according to claim 3 wherein said rectifier circuit, said power factor correction circuit, said non-isolated DC-DC converting circuit, said bus capacitor and said high-voltage battery unit are operated at an operating voltage higher than a safety extra-low voltage.

5. The high-voltage battery charging system according to claim 4 wherein said high-voltage battery charging system and said high-voltage battery unit are separated or isolated from said vehicle body via a high voltage-resistant insulating material, or said high-voltage battery charging system and said high-voltage battery unit are separated or isolated from said vehicle body by at least a specified safety distance, wherein said specified safety distance is 3~8mm, 5mm, 6mm, 6.5mm, 7mm, 9mm or 12mm.

6. The high-voltage battery charging system according to claim 5 wherein said high-voltage battery charging system and said high-voltage battery unit are contained in respective insulated containers, and said high-voltage battery charging system is connected with said high-voltage battery unit and said utility power source via high voltage-resistant cables with insulating covering.

7. The high-voltage battery charging system according to claim 6 wherein said charging voltage and said AC input voltage are respectively transmitted to said high-voltage battery unit and said high-voltage battery charging system through said high voltage-resistant cables.

8. The high-voltage battery charging system according to claim 5 wherein said electric vehicle body is coated with a high voltage-resistant insulating material, or an insulating spacer is disposed at the contact region between said electric vehicle body, said high-voltage battery charging system and said high-voltage battery unit.

9. The high-voltage battery charging system according to claim 1 wherein said power factor correction circuit is a continuous conduction mode (CCM) boost power factor correction circuit, a direct coupling modulated bias (DCMB) boost power factor correction circuit, a buck power factor correction circuit or a buck-boost power factor correction circuit, and said non-isolated DC-DC converting circuit is a buck non-isolated DC-DC converting circuit, a buck-boost non-isolated DC-DC converting circuit or a boost non-isolated DC-DC converting circuit.

10. The high-voltage battery charging system according to claim 1 wherein said power factor correction circuit comprises:
a first inductor having a first terminal connected to a positive output terminal of said rectifier circuit and a second terminal connected to a first connecting node;
a first rectifier element having a first terminal connected to said first connecting node and a second terminal connected to said bus;
a first current-detecting circuit for detecting a first current flowing through said first inductor, thereby generating a current-detecting signal;
a first switching circuit, wherein said first switching circuit and said first current-detecting circuit are serially connected between said first connecting node and said common terminal; and
a power factor correction controlling unit connected to said common terminal, said rectifier circuit, said bus, a control terminal of said first switching circuit and said first current-detecting circuit for controlling operations of said power factor correction circuit.

11. The high-voltage battery charging system according to claim 10 wherein said power factor correction controlling unit comprises:
an input waveform detecting circuit connected to said rectifier circuit and said common terminal for reducing a voltage magnitude of said rectified voltage and filtering off high-frequency noise contained in said rectified voltage thereby generating an input detecting signal, wherein a waveform of said input detecting signal is identical to a waveform of said AC input voltage after being rectified;
a first feedback circuit connected to said bus and said common terminal, wherein said bus voltage is subject to voltage-division by sad first feedback circuit, thereby generating a first feedback signal; and
a power factor correction controller connected to said input waveform detecting circuit and said first feedback circuit for controlling a duty cycle of said first switching circuit according to said input detecting signal and said first feedback signal, so that said bus voltage is maintained at a rated voltage value and the distribution of said AC input current is similar to the waveform of said AC input voltage.

12. The high-voltage battery charging system according to claim 1 wherein said non-isolated DC-DC converting circuit is a single-phase or multi-phase non-isolated DC-DC converting circuit.

13. The high-voltage battery charging system according to claim 1 wherein said non-isolated DC-DC converting circuit comprises:
a second inductor interconnected between a second connecting node and said high-voltage battery unit;
a second rectifier element interconnected between said second connecting node and said common terminal;
a first output capacitor interconnected between said high-voltage battery unit and said common terminal;
a second switching circuit interconnected between said bus and said second connecting node; and
a DC-DC controlling unit connected to a control terminal of said second switching circuit, said common terminal and said high-voltage battery unit for controlling on/off statuses of said second switching circuit according to said charging voltage.

14. The high-voltage battery charging system according to claim 13 wherein said DC-DC controlling unit comprises:
a second feedback circuit connected to said high-voltage battery unit and said common terminal, wherein said charging voltage is subject to voltage-division by sad second feedback circuit, thereby generating a second feedback signal; and
a DC-DC controller connected to said control terminal of said second switching circuit, said second feedback circuit and said common terminal, wherein said DC-DC controller discriminates whether said charging voltage is maintained at a rated voltage value according to said second feedback signal, so that a duty cycle of said second switching circuit is controlled and said charging voltage is maintained at said rated voltage value.

15. The high-voltage battery charging system according to claim 14 wherein said DC-DC controlling unit of said non-isolated DC-DC converting circuit further comprises a second current-detecting circuit for sampling a current signal outputted from said non-isolated DC-DC converting circuit.
